## Europäisches Patentamt

## European Patent Office

## Office européen des brevets

(19)

(11) Veröffentlichungsnummer: **0 166 081**
**A2**

(12) # EUROPÄISCHE PATENTANMELDUNG

(21) Anmeldenummer: **85103214.4**

(22) Anmeldetag: **20.03.85**

(51) Int. Cl.⁴: **A 23 B 4/02**

(30) Priorität: **21.05.84 DE 3418850**

(43) Veröffentlichungstag der Anmeldung: **02.01.86**
**Patentblatt 86/1**

(84) Benannte Vertragsstaaten: **BE FR GB IT NL SE**

(71) Anmelder: **Holz, Ernst, Würzburgerstrasse 74-76,
D-7920 Heidenheim-Schnaitheim (DE)**

(72) Erfinder: **Holz, Ernst, Würzburgerstrasse 74-76,
D-7920 Heidenheim-Schnaitheim (DE)**

(74) Vertreter: **Lorenz, Werner, Dipl.-Ing., Fasanenstrasse 7,
D-7920 Heidenheim (DE)**

(54) **Vorrichtung zur Druckbehandlung von Fleisch.**

(57) Eine Vorrichtung zur Druckbehandlung von Fleisch, insbesondere von rohem Schinken vor dem Einbringen von Pökellake, ist mit zwei in einem Gehäuse (1) gelagerten sich gegenüberliegenden rotierenden Druckwalzen (3, 4) versehen, die an ihren Mantelflächen mit Vorsprüngen, Zähnen (10) oder längs oder schräg zu den Mantellinien verlaufenden Stegen oder Rippen (7) versehen sind. Die zwischen den Stegen (7) liegenden Nuten (8) sind an wenigstens einer der Druckwalzen im Querschnitt gesehen satteldachartig ausgebildet. Der Umfangskreis durch die Spitzen der Dächer (9) der Nuten (8) kann 0,5–5 mm, vorzugsweise 1–2 mm kleiner sein als der Umfangskreis um die Stege.

PATENTANWALT

DIPL.-ING. WERNER LORENZ     -1-

Fasanenstraße 7
D-7920 Heidenheim

0166081

10. Mai 1984 hf

Akte: HO 1211


Anmelder:
=========


Ernst Holz

Würzburger Straße 74-76

7920 Heidenheim-Schnaitheim


Vorrichtung zur Druckbehandlung von Fleisch
============================================

Die Erfindung betrifft eine Vorrichtung zur Druckbehandlung von Fleisch, insbesondere von rohem Schinken vor dem Einbringen von Pökellake, mit zwei in einem Gehäuse gelagerten sich gegenüberliegenden rotierenden Druckwalzen, die an ihren Mantelflächen mit Vorsprüngen, Zähnen oder längs oder schräg zu den Mantellinien verlaufenden Stegen oder Rippen mit dazwischen liegenden Nuten versehen sind.


Eine Vorrichtung dieser Art ist z.B. aus der DE-PS 30 02 636 bekannt. Sie dient dazu das Fleischgewebe aufzureißen und die Fleischzellen zu öffnen, damit Pökellake leichter eindringen kann. Insbesondere sollen durch diese Druckbehandlung
die Eiweißzellen geöffnet werden, in denen die Pökellake gebunden wird.

Zur Druckbehandlung wird in der DE-PS 30 02 636 ein Druckwalzenpaar verwendet, wobei eine Druckwalze mit längs der
Mantellinien verlaufenden Stege versehen ist, während die
andere Walze als Transportwalze eine glatte Oberfläche besitzt. Es sind jedoch auch schon andere Oberflächenformen
mit Vorsprüngen, Zähnen, Messer, Nadeln und dgl. bekannt,
welche alle die Aufgabe haben eine Oberflächenvergrößerung
des zu behandelnden Fleisches und eine Öffnung der Zellen
zu erreichen.

Diese bekannten Druckwalzen arbeiten mehr oder weniger zufriedenstellend, aber entweder findet keine so starke Oberflächenvergrößerung statt, oder das Fleisch wird so grob
aufgerissen bzw. es werden so tiefe Einschnitte hergestellt,
daß Lufteinschlüsse auftreten. Diese Lufteinschlüsse sind
jedoch Keimzellen für Bakterien und die Haltbarkeit des
Fleisches leidet in erheblichem Maße darunter.

Der vorliegenden Erfindung liegt daher die Aufgabe zugrunde
eine Vorrichtung der eingangs erwähnten Art zu schaffen, mit der eine erhebliche Oberflächenvergrößerung und ein gutes Öffnen der Fleisch- bzw. Eiweißzellen ohne all zu tiefe Einschnitte erreicht wird.

Erfindungsgemäß wird diese Aufgabe dadurch gelöst, daß an wenigstens einer der Druckwalzen die Nuten im Querschnitt der Druckwalze gesehen satteldachartig ausgebildet sind.

Durch die erfindungsgemäße Ausbildung der Nuten kann nun trotz einem hohen aufzubringenden Druck kein übermäßig starkes Verquetschen des Fleisches auftreten. Wird nämlich das Fleisch von der Gegendruckwalze, welche im allgemeinen zahnartig mit der anderen Druckwalze zusammenarbeitet, durch deren Stege, Rippen, Vorsprünge oder dgl. in die Nuten der anderen Druckwalze gepreßt, so kann es aufgrund der Satteldachform nun  seitlich ausweichen, so daß eine gewisse Druckentlastung auftritt. Gleichzeitig wird dadurch jedoch noch eine Oberflächenvergrößerung des Fleisches erreicht.

Versuche haben gezeigt, daß keine tiefen Einschnitte im Fleisch entstehen und damit nahezu auch keine Lufteinschlüsse auftreten. Bei einer geeigneten Kombination der beiden Druckwalzen kann die nach einem Einspritzen von Pökellake erforderliche Walk- bzw. Massierzeit in einem nachgeschalteten Behälter um ca. 50 - 80% verringert werden.

Weiterhin hat sich herausgestellt, daß im Vergleich zu der in der DE-PS 30 02 636 beschriebenen Reihenfolge, wonach zuerst Pökellake eingespritzt wird und anschließend die Druckbehandlung erfolgt, die umgekehrte Reihenfolge im allgemeinen mehr Vorteile bringt. Durch eine vorgeschaltete Druckbehandlung werden die Eiweißzellen zur Aufnahme der Pökellake geöffnet und können damit erhebliche Mengen aufnehmen, während bei einer umgekehrten Reihenfolge die Gefahr besteht, daß die vorher eingespritzte Pökellake teilweise wieder herausgedrückt wird. Selbstverständlich kann die erfindungsgemäße Vorrichtung jedoch auch in der gleichen Reihenfolge wie in der DE-PS 30 02 636 beschrieben eingesetzt werden.

Es hat sich herausgestellt, daß es nicht erforderlich ist, daß die Nuten sehr tief sind. Im Gegenteil, die besten Resultate wurden erzielt, wenn der Umfangskreis durch die Spitzen der Dächer der Nuten um 0,5 - 5mm kleiner ist, als der Umfangskreis um die Stege. Die besten Ergebnisse wurden dabei mit Radien erzielt, die nur um 1 - 2 mm kleiner waren.

Ebenso hat man festgestellt, daß der Einfluß der Anzahl der über den Umfang verteilten Stege von großer Bedeutung ist.

In Abhängigkeit von dem Durchmesser der Druckwalze wird man im allgemeinen 8 - 12, vorzugsweise 10, Stege über die Mantelfläche verteilt und parallel zu den Mantellinien verlaufend anordnen.

Maßgebend für das Resultat sind auch die Höhe und die Form der Stege. So können die Stege 3 -10, vorzugsweise 5mm hoch sein und an wenigstens einer der Druckwalzen sind diese im Querschnitt gesehen wenigstens annähernd rechteck- oder rautenförmig. Eine andere Ausgestaltung der Stegform kann darin bestehen, daß diese wenigstens in ihren äußeren Bereichen eine Halbkreisform aufweisen oder abgerundet sind.

Es hat sich nun herausgestellt, daß sehr gute Ergebnisse erzielt werden, wenn an einer der Druckwalzen die Stege rechteck- oder rautenförmig mit dazwischenliegenden satteldachartigen Nuten und an der anderen Druckwalze die Stege eine Halbkreisform aufweisen oder abgerundet sind. Diese Druckwalzenkombination ist besonders zur Behandlung von rohem Schinken geeignet. Die rechteck- oder rautenförmigen Stege sorgen für eine entsprechende Oberflächenvergrößerung und die abgerundeten Stege dienen zur Entlastung des Fleisch- bzw. Muskelgewebes.

Gute Ergebnisse wurden auch erzielt, wenn an wenigstens einer der Druckwalzen eine Vielzahl von über die Mantelfläche verteilten pyramidenartigen Vorsprüngen angeordnet werden, wobei die andere Druckwalze dann mit Stegen von rechteck- oder rautenartiger Form mit dazwischenliegenden satteldachartigen Nuten versehen sein kann, oder eine Halbkreisform aufweisen oder abgerundet sind.

Diese Walzenkombination ist ebenfalls zur Behandlung von rohem Schinken sehr geeignet, wobei nunmehr die Walze mit den pyramidenartigen Vorsprüngen für eine Oberflächenvergrößerung des Fleisches sorgt und die Stegwalze die Muskelentspannung und Öffnung der Eiweißzellen bewirken kann.

Im Rahmen der Erfindung ist jedoch auch die Kombination von zwei Druckwalzen mit pyramidenförmigen Vorsprüngen möglich. Diese Ausgestaltung wird man wählen, wenn Steaks oder Schnitzel bearbeitet werden sollen, wobei zur Behandlung von Steaks Druckwalzen mit größeren pyramidenartigen Vorsprüngen verwendet werden, während zur Behandlung von Schnitzel entsprechende Druckwalzen mit kleineren pyramidenartigen Vorsprüngen gewählt werden.

Statt nur zwei sich gegenüberliegende Druckwalzen können selbstverständlich im Rahmen der Erfindung auch je zwei Druckwalzenpaare, d.h. insgesamt 4 Druckwalzen, hintereinander angeordnet werden. In diesem Falle wird das erste Druckwalzenpaar die Oberflächenvergrößerung und das Aufschließen der Eiweißzellen bewirken, während das zweite Druckwalzenpaar für eine Entspannung des Fleisch- bzw. Muskelgewebes sorgen wird.

Damit die erfindungsgemäße Vorrichtung sehr universell eingesetzt werden kann ist es von Vorteil, wenn die Druckwalzen mit einem Schnellverschluß versehen sind, über den sie in dem Gehäuse gelagert sind. Durch diese Maßnahme können die Druckwalzen sehr schnell und leicht ausgewechselt werden und verschiedene Fleischsorten mit einer einzigen Vorrichtung optimal bearbeitet werden.

Eine mögliche Ausgestaltung für den Schnellverschluß besteht darin, daß er eine mit einer Antriebswalze einer Antriebseinrichtung verbundene Kupplungsscheibe mit einem Lagerzapfen aufweist, der in eine Zentrumsbohrung der Druckwalze eingeschoben ist und daß die Kupplungsscheibe und die Druckwalze an einer Stirnseite miteinander fluchtende Bohrungen aufweisen, durch die Mitnehmer gesteckt sind.

Nachfolgend sind anhand der Zeichnung Ausführungsbeispiele der Erfindung, aus denen weitere erfindungsgemäße Merkmale hervorgehen, prinzipmäßig beschrieben.

Es zeigen:


Figur 1: Die erfindungsgemäße Vorrichtung in Prinzipdarstellung

Figur 2: eine stirnseitige Ansicht einer erfindungsgemäßen
Druckwalze

Figur 3: eine Seitenansicht der Druckwalze nach der Figur 2,
teilweise im Schnitt

Figur 4: eine stirnseitige Ansicht einer Druckwalze
anderer Form

Figur 5: ausschnittsweise eine Seitenansicht der Druckwalze
nach der Figur 4, teilweise im Schnitt

Figur 6: eine Kupplungsscheibe als Schnellverschluß.


Die erfindungsgemäße Vorrichtung weist ein Gehäuse 1 mit
einem Trichter 2 zur Zuführung des Fleisches auf. In dem
Gehäuse 1 sind in geringem Abstand voneinander und parallel
zueinander zwei Druckwalzen 3 und 4 drehbar gelagert. Unter
den beiden Druckwalzen 3 und 4 befindet sich ein Förderband
5, das das Fleisch nach der Druckbehandlung zu einem Injektor 6 führt, in welchem in bekannter Weise Pökallake in das
Fleisch eingespritzt wird. Aufbau und Wirkungsweise eines
derartigen Injektors sind allgemein bekannt, weshalb dieser
hier nicht näher beschrieben wird.

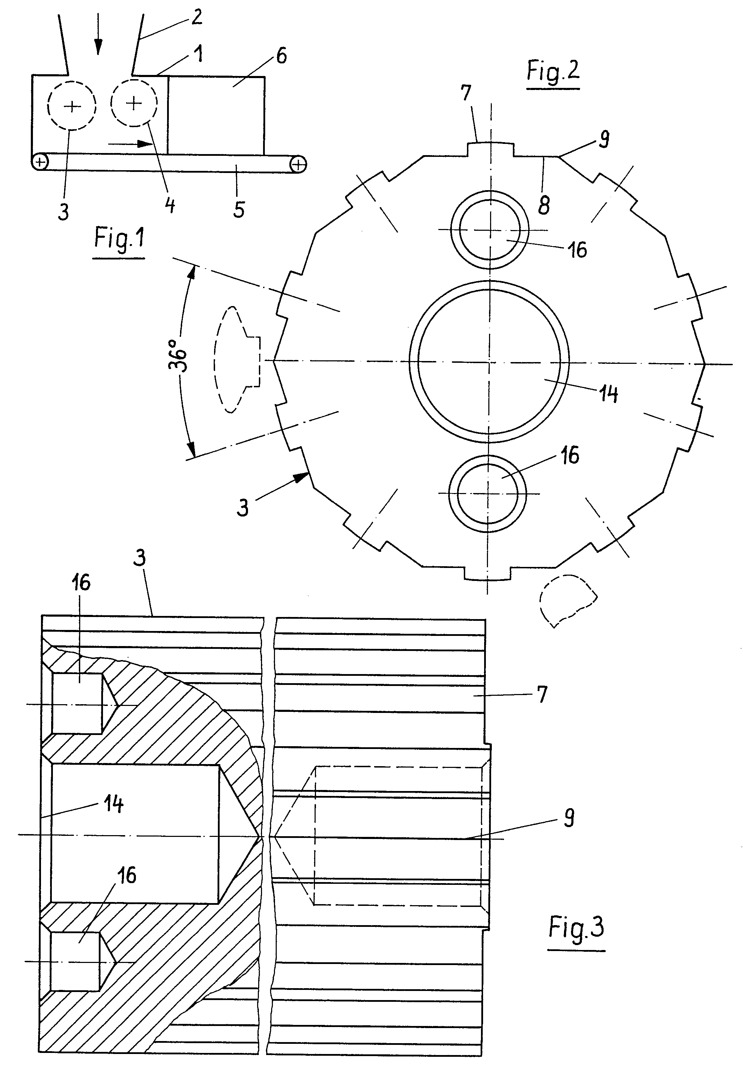

In den Figuren 2 - 5 sind Ausgestaltungen der Druckwalzen 3 und 4 in vergrößerter Darstellung gezeigt.

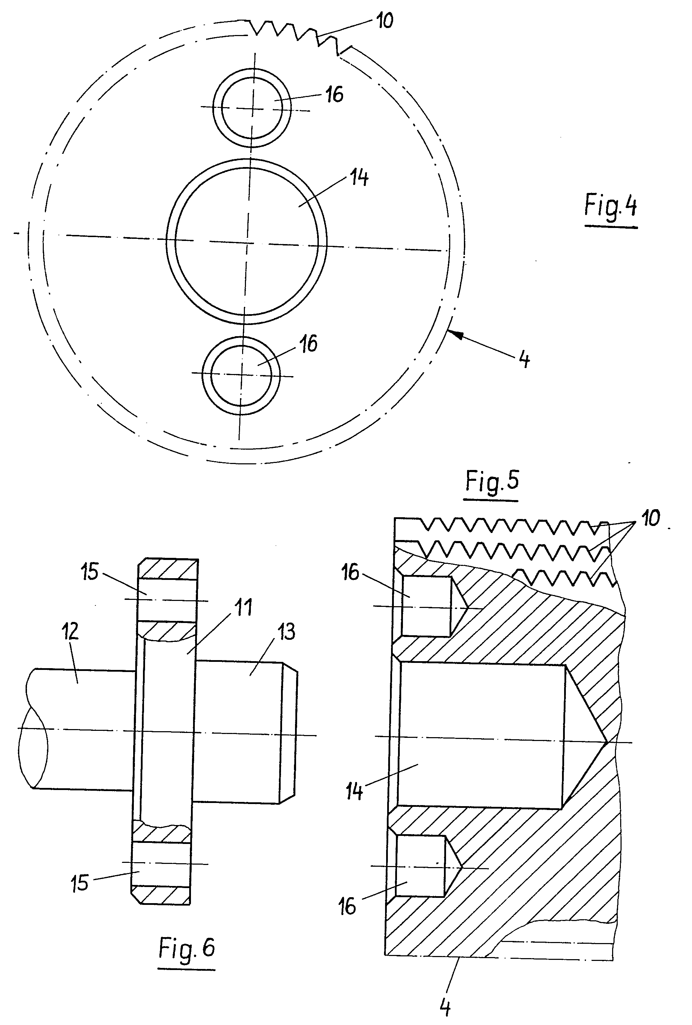

Dabei kann die in den Figuren 2 und 3 dargestellte Druckwalze die Druckwalze 3 und die in den Figuren 4 und 5 dargestellte Druckwalze die Druckwalze 4 gemäß Figur 1 sein.

Die in den Figuren 2 und 3 dargestellte Druckwalze 3 weist zehn über die Mantelfläche verteilt und parallel zu den Mantellinien liegende Stege 7 auf. Damit beträgt der Abstand voneinander benachbarter Stegmittelpunkte jeweils $36^{\circ}$. Jeweils zwischen zwei Stegen 7 liegt eine Nut 8, welche im Querschnitt gesehen satteldachartig ausgebildet ist. Ein durch die Spitzen der Dächer 9 gezogener Umfangskreis ist nur um ca. 1 - 2mm kleiner als ein durch die Stege 7 gezogener Umfangskreis. Bei einem Außendurchmesser der Druckwalze 3 von 150mm beträgt die Stegbreite 15mm und die Höhe der Stege 5mm. Versuche haben gezeigt, daß mit einer derartigen Ausgestaltung der Walze sehr gute Ergebnisse erzielt werden. Insbesondere ist die geringe Höhe der Stege und der geringe Unterschied in den Radien zwischen den Stegen und den dazwischen liegenden Nuten ausreichend. Bisher hat man geglaubt, daß man wesentlich höhere Stege verwenden müßte, um eine entsprechende Oberflächenvergrößerung des Fleisches zu erreichen. Dabei sind dann jedoch die beschriebenen Nachteile aufgetreten.

Insbesondere kam es zu Einrissen und zum Abquetschen des zu behandelnden Fleisches.

In den Figuren 4 und 5 ist die Druckwalze 4 dargestellt, die statt parallel zu den Mantellinien verlaufenden Stege 7 eine Vielzahl von über den Umfang der Mantelfläche verteilten pyramidenartige Vorsprünge 10 aufweist. Die Stege nach den Figuren 2 und 3 hingegen weisen im Querschnitt eine Rechteckform auf, wobei die Außenseiten ggf. einen Radius entsprechend dem Außendurchmesser der Walze aufweisen können. Angesichts der geringen Breite der Stege ist eine Radiusform bei dem Walzendurchmesser jedoch praktisch ohne Einfluß. Statt einer Rechteckform kann jedoch auch eine Rautenform vorliegen, wobei die schmälere Seite außen liegt.

Die Druckwalze 4 mit den pyramidenförmigen Vorsprüngen kann in einfacher Weise dadurch hergestellt werden, daß in eine Walze mit einer glatten Oberflächenform ein Trapezgewinde aufgeschnitten wird. Schneidet man anschließend mit einem Scheibenfräser, der parallel zu den Mantellinien der Druckwalze geführt wird, Nuten in das Gewinde ein, so ergeben sich die einzelnen pyramidenartigen Vorsprünge. Die Druckwalzen können aus beliebigem Material hergestellt sein. Im allgemeinen wird man jedoch einen leicht zu reinigenden Kunststoff hierfür verwenden.

Damit die Druckwalzen 3 und 4 sehr schnell und einfach ausgetauscht werden können, sind diese über einen Schnellverschluß in dem Gehäuse 1 gelagert. Auf einer Seite können die Druckwalzen mit einem - nicht dargestellten - Lagerzapfen in einem Lager gelagert sein, während sie auf der anderen Seite in einer Kupplungsscheibe 11 gelagert sind. Die Kupplungsscheibe besitzt auf einer Seite einen Antriebszapfen 12, durch den sie mit einer Antriebswelle - nicht dargestellt - einer Antriebseinrichtung verbunden ist. Auf der anderen Seite der Kupplungsscheibe 11 befindet sich ein Lagerzapfen 13, der in eine Zentrumsbohrung 14 in der Stirnseite der Druckwalze 3 bzw. 4 einpaßbar ist. Die Kupplungsscheibe 11 ist mit zwei Bohrungen 15 versehen. Ebenso sind in der Stirnseite der Druckwalze 3 bzw. 4 zwei Bohrungen 16 angeordnet, die nach einem Einführen des Lagerzapfens 13 in die Zentrumsbohrung 14 bei einer entsprechenden Verdrehung der Druckwalze 3 bzw. 4 mit den Bohrungen 15 fluchten. Steckt man nun nicht dargestellte Mitnehmer, z.B. Bolzen, in die miteinander fluchtenden Bohrungen 15 und 16, so erhält man die gewünschte drehfeste Schnellverbindung der Druckwalzen 3 und 4 mit der Kupplungsscheibe.

Statt einer Rechteckform der Stege wie in den Figuren 2 und 3 dargestellt, können die Stege auch im Querschnitt gesehen abgerundet sein oder eine Halbkreisform besitzen. Ebenso können statt pyramidenartiger Vorsprünge 10 in gleicher Weise auch Vorsprünge in Form von Warzen oder dgl. vorgesehen sein. Die Halbkreisform der Stege ist in der Fig. 2 rechts unten als Teil einer Gegenwalze gestrichelt angedeutet. Links oben ist in der gleichen Figur der Steg einer Gegenwalze in einer Position gestrichelt angedeutet, aus der ersichtlich ist, daß das zu behandelnde Fleisch während des Druckvorganges seitlich in den satteldachartigen Stegen ausweichen kann.

PATENTANWALT

DIPL.-ING. WERNER LORENZ

Fasanenstraße 7
D-7920 Heidenheim
0166081

10. Mai 1984 hf

Akte: HO 1211

Anmelder:
=========


Ernst Holz

Würzburger Straße 74-76

7920 Heidenheim-Schnaitheim


P a t e n t a n s p r ü c h e :
=================================


1. Vorrichtung zur Druckbehandlung von Fleisch, insbesondere von rohem Schinken vor dem Einbringen von Pökellake, mit zwei in einem Gehäuse gelagerten sich gegenüberliegenden rotierenden Druckwalzen, die an ihren Mantelflächen mit Vorsprüngen, Zähnen oder längs oder schräg zu den Mantellinien verlaufenden Stegen oder Rippen mit dazwischen liegenden Nuten versehen sind,

   d a d u r c h   g e k e n n z e i c h n e t , daß

   an wenigstens einer der Druckwalzen (3,4) die Nuten (8) im Querschnitt der Druckwalze gesehen satteldachartig

   ausgebildet sind.


- 2 -

0166081

2. Vorrichtung nach Anspruch 1,

   d a d u r c h   g e k e n n z e i c h n e t , daß
   der Umfangskreis durch die Spitzen der Dächer (9) der
   Nuten (8) um 0,5 - 5 mm kleiner ist, als der Umfangskreis um die Stege (7).

3. Vorrichtung nach Anspruch 2,

   d a d u r c h   g e k e n n z e i c h n e t , daß
   der Umfangskreis durch die Spitzen der Dächer (9) der
   Nuten (8) um 1 - 2 mm kleiner ist, als der Umfangskreis
   um die Stege (7).

4. Vorrichtung nach einem der Ansprüche 1 - 3,

   d a d u r c h   g e k e n n z e i c h n e t , daß
   acht bis zwölf, vorzugsweise zehn, Stege (7) über die
   Mantelfläche verteilt und parallel zu den Mantellinien
   verlaufend angeordnet sind.

5. Vorrichtung nach einem der Ansprüche 1 - 4,

   d a d u r c h   g e k e n n z e i c h n e t , daß
   bei einem Außendurchmesser der Walze von 150 mm zehn
   Stege (7) über die Mantelfläche verteilt angeordnet sind.

6. Vorrichtung nach einem der Ansprüche 1 - 5,

   d a d u r c h   g e k e n n z e i c h n e t , daß
   die Höhe der Stege (7) 3 -10 mm, vorzugsweise 5 mm
   beträgt.

- 3 -

0166081

7. Vorrichtung nach einem der Ansprüche 1 - 6,
   d a d u r c h   g e k e n n z e i c h n e t , daß
   an wenigstens einer der Druckwalzen (3) die Stege (7)
   im Querschnitt gesehen wenigstens annähernd rechteckig
   oder rautenförmig sind.

8. Vorrichtung nach einem der Ansprüche 1 - 6,
   d a d u r c h   g e k e n n z e i c h n e t , daß
   an wenigstens einer der Druckwalzen (3,4) die Stege (7)
   in ihren äußeren Bereichen eine Halbkreisform aufweisen
   oder abgerundet sind.

9. Vorrichtung nach Anspruch 7 und 8,
   d a d u r c h   g e k e n n z e i c h n e t , daß
   an einer der Druckwalzen (3) die Stege (7) rechteck- oder
   rautenförmig mit dazwischenliegenden satteldachartigen
   Nuten (8) und an der anderen Druckwalze (4) die Stege (7)
   eine Halbkreisform aufweisen oder abgerundet sind.

10. Vorrichtung nach einem der Ansprüche 1 - 9,
    d a d u r c h   g e k e n n z e i c h n e t , daß
    an wenigstens einer der Druckwalzen (3,4) eine Vielzahl
    von über die Mantelfläche verteilten pyramidenartigen
    Vorsprüngen (10) angeordnet sind.

- 4 -

11. Vorrichtung nach einem der Ansprüche 7 - 10,

d a d u r c h   g e k e n n z e i c h n e t , daß

an einer der Druckwalzen (3) die Stege (7) rechteck- oder
rautenförmig mit dazwischenliegenden satteldachartigen
Nuten (8) ausgebildet sind oder eine Halbkreisform aufweisen oder abgerundet sind und an der anderen Druckwalze
(4) die pyramidenartigen Vorsprünge (10) angeordnet sind.


12. Vorrichtung nach einem der Ansprüche 1 - 11,

d a d u r c h   g e k e n n z e i c h n e t , daß

die Druckwalzen (3,4) mit einem Schnellverschluß (11)
versehen sind, über den sie in dem Gehäuse (1) gelagert
sind.


13. Vorrichtung nach Anspruch 12,

d a d u r c h   g e k e n n z e i c h n e t , daß

der Schnellverschluß eine mit einer Antriebswelle einer
Antriebseinrichtung verbundene Kupplungsscheibe (11) mit
einem Lagerzapfen (13) aufweist, der in eine Zentrumsbohrung (14) der Druckwalze (3,4) eingeschoben ist und
daß die Kupplungsscheibe (11) und die Druckwalze (3,4)
an einer Stirnseite miteinander fluchtende Bohrungen
(15,16) aufweisen, durch die Mitnehmer gesteckt sind.

0166081

Fig.1

Fig.2

Fig.3

0166081

Fig.4

Fig.5

Fig.6